# EUROPÄISCHE PATENTANMELDUNG

(11) **EP 3 913 325 A1**
(43) Veröffentlichungstag der Anmeldung: **24.11.2021**
(21) Anmeldenummer: 21185625.7
(22) Anmeldetag: 14.05.2019
(51) Int. Cl.: G01B 21/04

(54) **VERFAHREN UND ANORDNUNG ZUM FESTLEGEN VON VERMESSUNGSPARAMETERN FÜR EIN KOORDINATENMESSGERÄT**

(62) Teilanmeldung aus: 19174274.1
(71) Anmelder: Carl Zeiss Industrielle Messtechnik GmbH, 73447 Oberkochen (DE)
(72) Erfinder: Haas, Günter, 73432 Aalen (DE); Dotschkal, Florian, 73453 Abtsgmünd (DE); Schramm, Tobias, 73569 Eschach (DE); Mayer, Florian, 71522 Backnang (DE)
(74) Vertreter: Ramrath, Lukas

(57) **Zusammenfassung**

Die Erfindung betrifft ein Verfahren zum Festlegen von Vermessungsparametern für ein Koordinatenmessgerät (12), mit:
- Erhalten einer Mehrzahl von Vermessungsergebnissen, die durch reales oder simuliertes Vermessen einer Mehrzahl von artgleichen Werkstücken (20) gewonnen wurden;
- Ermitteln von wenigstens einem für das Vermessen kritischen Bereich (26) der Werkstücke (20) anhand der Vermessungsergebnisse; und
- Festlegen von wenigstens einem Vermessungsparameter des Koordinatenmessgeräts (12) zum Vermessen des kritischen Bereichs (26).

Ferner betrifft die Erfindung eine Anordnung (10) zur Werkstückvermessung, mit einem Koordinatenmessgerät (12) und mit einer Steuereinrichtung, wobei die Steuereinrichtung dazu eingerichtet ist, ein Verfahren gemäß jeglichem der vorangehenden Ansprüche auszuführen.

## Beschreibung

Die Erfindung betrifft ein Verfahren und eine Anordnung zum Festlegen von Vermessungsparametern für ein Koordinatenmessgerät. Bei den Vermessungsparametern kann es sich um Parameter handeln, die einen Messprozess definieren (d.h. einen Prozess zur erstmaligen Gewinnung und/oder Erfassung von Messsignalen). Ebenso kann es sich um einen Parameter zur Auswertung von gewonnenen Messsignalen handeln, z.B. um daraus dann schlussendliche Vermessungsergebnisse zu ermitteln.

Das Vermessen von Werkstücken mittels Koordinatenmessgeräten ist bekannt. Koordinatenmessgeräte dienen allgemein dazu, eine Oberfläche von Werkstücken taktil oder berührungslos zu erfassen (oder, mit anderen Worten, abzutasten) und darauf basierend eine räumliche Position (d.h. Koordinaten) der erfassten Messpunkte an der Oberfläche zu bestimmen. Typischerweise wird hierbei eine sensorische Einheit zum Aufnehmen von Messsignalen durch das Koordinatenmessgerät relativ zu dem zu vermessenden Werkstück bewegt. Die sensorische Einheit kann z.B. in Form eines taktilen Messtasters an einem sogenannten Sensorkopf und/oder Messkopf oder in Form eines berührungslos erfassenden optischen Sensors realisiert sein. Koordinatenmessgeräte können in an sich bekannter Weise die sensorische Einheit über mehrere Maschinenachsen relativ zu einem Werkstück bewegen, wobei die Maschinenachsenbewegung z.B. von einer CNC-Steuerung koordiniert werden. Beispielsweise sind Koordinatenmessgeräte bekannt, bei denen zwei oder drei entsprechende Achsen orthogonal zueinander ausgerichtet und/oder in Portalbauweise angeordnet sind. Ebenso sind Koordinatenmessgeräte in Gantry-Bauweise, in Form von Horizontalarmgeräten oder von Gelenkarmgeräten bekannt.

Sofern nicht anders angegeben oder ersichtlich, sind unter dem Begriff Koordinatenmessgerät im Rahmen dieser Offenbarung aber auch Maschinen zu verstehen, die eine hierin geschilderte Koordinatenerfassung ermöglichen, obwohl sie von den vorstehenden Varianten baulich abweichen. Hierzu zählen z.B. Roboterarme mit Drehgelenken, an denen anstelle eines Werkzeugs ein Sensor zur Erfassung der Werkstückoberfläche (beispielsweise ein Streifenprojektionssensor) befestigt ist, oder Werkzeugmaschinen, an denen anstelle eines Bearbeitungswerkzeugs ein Sensor zur Erfassung der Werkstückoberfläche (beispielsweise ein taktiler Sensor) befestigt ist. Außerdem sind Hexapodenmechaniken bekannt, an denen anstelle eines Bearbeitungswerkzeugs ein Sensor zur Erfassung der Werkstückoberfläche (beispielsweise ein taktiler Sensor) befestigt ist.

Weiter fällt unter dem Begriff Koordinatenmessgerät z.B. auch ein Gerät, das durch tomografische Verfahren invasive Strahlung auf das Werkstück einstrahlt und z.B. Durchstrahlungsbilder und/oder Reflexionsbilder (englisch: radiograph) aufnimmt. Insbesondere kann aus mehreren solcher Bilder durch Rekonstruktionsverfahren ein dreidimensionales Bild des Werkstücks erzeugt werden, aus dem wiederum Werte sogenannter Prüfmerkmale bestimmt werden können. Ferner können auch nicht per Roboter geführte Streifenprojektionssensoren und/oder allgemeine optische Abstandssensoren (z.B. Weißlichtsensoren) und/oder optische Liniensensoren ein Koordinatenmessgerät bilden oder Bestandteil hiervon sein, beispielsweise wenn diese in üblicher Weise eine dreidimensionale Werkstückform durch Erfassen von Oberflächenkoordinaten ermöglichen.

Die Erfindung richtet sich prinzipiell auf jegliche der oben genannten Varianten und kann entsprechend auch auf jede dieser Varianten beschränkt werden, insbesondere auf Koordinatenmessgeräte, umfassend eine Anordnung von Linearachsen (z.B. drei orthogonal zueinander ausgerichtete Linearachsen), wie sie z.B. bei herkömmlichen Koordinatenmessgeräten in portalbauweise verwendet werden.

Oftmals müssen mehrere artgleiche Werkstücke vermessen werden, beispielsweise um im Rahmen einer seriellen Werkstückfertigung zumindest stichprobenartig Eigenschaften der gefertigten Werkstücke zu überprüfen. Es ist dabei bekannt, anhand der insgesamt ermittelten Vermessungsergebnisse die Qualität der Werkstückfertigung zu überwachen und z.B. eine Abnutzung von Fertigungswerkzeugen zu erkennen. Mit anderen Worten kann auf Basis der gewonnenen Messergebnisse der Fertigungsprozess überwacht und gesteuert werden.

Der Vermessungsvorgang an sich wird üblicherweise anhand von Erfahrungswerten festgelegt, wie sie z.B. von Herstellern der Koordinatenmessgeräte vorgegeben und/oder katalogisiert werden. Zur Auswahl und Anpassung der Erfahrungswerte ist persönliche Erfahrung erforderlich.

Dieses Vorgehen bringt verschiedene Nachteile mit sich. Zum einen erhöht dies den subjektiven Einfluss auf die Vermessungsergebnisse, da es sozusagen einem Bediener überlassen bleibt, für die richtige Vermessungsstrategie zu sorgen. Insbesondere kann allgemein ein iteratives und zeitaufwendiges Vorgehen erforderlich sein, um die Messstrategie geeignet zu wählen. Ferner erfolgt in der Regel keine Analyse der Messergebnisse, um die Vermessungsstrategie selbst zu überdenken oder zu bewerten, sondern allenfalls, um den Fertigungsprozess zu überwachen.

Die Erfindung richtet sich demnach auf die Aufgabe, das Auswählen einer geeigneten Messstrategie insbesondere für eine Vermessung mehrerer artgleicher Werkstücke (.d.h. bei einer seriellen Werkstückvermessung) zu vereinfachen.

Diese Aufgabe wird durch ein Verfahren mit den Merkmalen von Anspruch 1 und eine Anordnung mit den Merkmalen von Anspruch 15 gelöst. Vorteilhafte Weiterbildungen sind in den abhängigen Ansprüchen angegeben. Es versteht sich, dass sämtliche der einleitend genannten Merkmale, Erläuterungen und Varianten auch bei der vorliegenden Erfindung vorgesehen sein bzw. auf diese zutreffen können, sofern nicht anders angegeben oder ersichtlich.

Allgemein wird vorgeschlagen, eine Mehrzahl artgleicher (aber verschiedener) Werkstücke mit einem Koordinatenmessgerät zu vermessen oder diese Vermessung zu simulieren (z.B. mittels artgleicher aber verschiedener, da toleranzbehafteter Werkstückmodelle). Anhand der dabei gewonnenen Vermessungsergebnisse können dann Werkstückbereiche der Werkstücke als kritische (Werkstück-)Bereiche identifiziert werden. Hierunter können Bereiche verstanden werden, die besondere Anforderungen an die Werkstückvermessung stellen und/oder für die eine während der ursprünglichen Werkstückvermessung verwendete Messstrategie unzureichend ist, da sich hierdurch beispielsweise keine ausreichend hohe Genauigkeit und/oder Reproduzierbarkeit der Vermessungsergebnisse erzielen lässt. Für diese kritischen Bereiche kann dann die Vermessungsstrategie geeignet angepasst werden. Erfindungsgemäß erfolgt dies bevorzugt automatisch. Insbesondere erfolgt vorzugsweise sowohl die Ermittlung der kritischen Bereiche als auch die geeignete Anpassung der Messstrategie (z.B. durch nachstehend erläutertes Festlegen von Vermessungsparametern) automatisch. Dies kann z.B. mittels einer Steuereinrichtung des Koordinatenmessgeräts erfolgen oder mit einer mit dem Koordinatenmessgerät verbundenen oder verbindbaren Steuereinrichtung. Diese kann wenigstens eine Prozessoreinrichtung umfassen und dazu eingerichtet sein, Programmanweisungen zum Bereitstellen jeglicher hierin geschilderter Funktionen und Ausführen jeglicher hierin geschilderter Schritte auszuführen.

Der Bediener wird hierdurch davon entlastet, ausschließlich selbst bzw. manuell und/oder iterativ eine geeignete Messstrategie zu finden. Ferner wird hierdurch die Vermessungsqualität verbessert, da objektiv geeignete Anpassungen der Messstrategie automatisch erfolgen können. Weiter kann eine Qualitätsverbesserung auch in der Form erzielt werden, dass die Messstrategie überhaupt als ein mögliches Verbesserungspotential und/oder Fehlerpotential erkannt wird. Bei bisherigen Lösungen kann es hingegen nicht immer möglich sein, oder nur anhand entsprechender Erfahrung möglich sein, zu differenzieren, ob unerwünschte ungenaue Messergebnisse auf die vermessenen Werkstücke oder die Messstrategie zurückzuführen sind. Da vorliegend die Messstrategie selbst automatisch angepasst wird, wird das von einer ungeeigneten Messstrategie ausgehende Fehlerpotential reduziert und so eine zusätzliche Verbesserungsmöglichkeit z.B. der Genauigkeit der Vermessungsergebnisse bereitgestellt.

Unter Messstrategie kann hierin ein Vorgehen zum Vermessen eines Werkstücks verstanden werden, dass durch einzelne Vermessungsparameter festgelegt wird.

Im Detail wird ein Verfahren zum Festlegen von Vermessungsparametern für ein Koordinatenmessgerät vorgeschlagen mit:
- Erhalten einer Mehrzahl von Vermessungsergebnissen, die durch reales oder simuliertes Vermessen einer Mehrzahl von artgleichen Werkstücken gewonnen wurden;
- Ermitteln von wenigstens einem für das Vermessen kritischen Bereich der Werkstücke anhand der Vermessungsergebnisse; und
- Festlegen von wenigstens einem Vermessungsparameter des Koordinatenmessgeräts zum Vermessen des kritischen Bereichs.

Wie erwähnt, können sich die Vermessungsparameter auf Vorgänge zum Erfassen von Messsignalen oder aber zum Auswerten von Messsignalen und/oder Messdaten für das Erzeugen der Vermessungsergebnisse richten. Im Rahmen des Verfahrens kann auch ein Schritt vorgesehen sein, die Vermessungsergebnisse zu ermitteln (d.h. die artgleichen Werkstücke zu vermessen und/oder eine Simulation des Vermessens der artgleichen Werkstücke durchzuführen).

Während des realen oder simulierten Vermessens können konstante Messbedingungen und insbesondere konstante Vermessungsparameter angewendet werden. Die artgleichen Werkstücke können allgemein gleichartig vermessen werden. Variationen der Messergebnisse sind dann primär auf Abweichungen der Werkstücke voneinander zurückzuführen.

Die Vermessungsergebnisse können Werte wenigstens einer vorbestimmten Vermessungsgröße (d.h. zu vermessenden Größe) eines jeden Werkstücks umfassen. Bevorzugt umfassen sie für jedes der artgleichen Werkstücke entsprechende Werte. Diese können dann z.B. im nachfolgenden Schritt zum Ermitteln der kritischen Bereiche statistisch ausgewertet werden.

Im Rahmen des simulierten Vermessens kann z.B. mit einem virtuellen Koordinatenmessgerät die Vermessung mehrerer artgleicher Werkstücke simuliert werden. Hierfür können die Werkstücke durch Werkstückmodelle repräsentiert werden, wobei diese z.B. aufgrund vorgegebener Toleranzen geringfügig voneinander abweichen können. Somit kann auch im Rahmen eines simulierten Vermessens eine gewisse Bandbreite von Vermessungsergebnissen für die einzelnen Werkstücke erhalten werden. Alternativ kann auch das stets gleiche Werkstückmodell verwendet werden, aber z.B. über zufällig variierende Simulationsparameter (z.B. ein Verrauschen der Simulationsparameter) eine Bandbreite an verschiedenen Vermessungsergebnissen erhalten werden. Diese Variation kann z.B. die im Rahmen des Vermessungsvorgangs erwartete Variation des Maschinenverhaltens und/oder der Wechselwirkungen mit den artgleichen Werkstücken abbilden.

Wie erwähnt, werden je Werkstück Vermessungsergebnisse erhalten. Vorzugsweise werden diese bereichsweise erfasst und/oder bestimmten Bereichen des Werkstücks zugeordnet. Eine Ermittlung von kritischen Bereichen kann dann ebenfalls bereichsweise erfolgen. Beispielsweise können für gleiche Bereiche der artgleichen Werkstücke die Vermessungsergebnisse miteinander verglichen werden. Anhand der nachfolgend erläuterten Kriterien kann dann eine unzulässige Uneinheitlichkeit und/oder Variation der Vermessungsergebnisse für diesen Bereich ermittelt werden. Letzteres kann bedeuten, dass der entsprechende Bereich als kritischer Bereich einzuordnen ist.

Jegliche der hierin erläuterten Bereiche von Werkstücken können dadurch festgelegt sein, dass sie wenigstens ein Prüfelement und/oder Prüfmerkmal oder, allgemein ausgedrückt, einen zu vermessenden Werkstückbereich umfassen. Beispielsweise können für die Werkstücke vorab Bereiche ausgewählt oder ermittelt werden, in denen Vermessungen stattfinden sollen. Für diese Bereiche können dann die jeweils hierfür gewonnenen Vermessungsergebnisse z.B. miteinander verglichen werden, um in der hierin geschilderten Weise kritische Bereiche zu identifizieren. Ein Ergebnis derartiger Vergleiche kann auch sein, dass Bereiche nicht als kritisch zu bewerten sind. Somit kann das Werkstück insgesamt in für die Vermessung kritische und unkritische Bereiche eingeteilt werden.

Ein Prüfelement kann ein Geometriemerkmal bezeichnen, für das vorbestimmte Eigenschaften und insbesondere die erwähnten Prüfmerkmale ermittelt werden sollen. Beispielsweise kann es sich bei dem Prüfmerkmal um eine Bohrung bzw. einen Kreis, eine Linie, eine Fläche, einen Punkt oder dergleichen handeln. Bei dem Prüfmerkmal kann es sich hingegen um eine zu vermessende Eigenschaft eines Geometriemerkmals wie einen Radius, einen Durchmesser, eine Exzentrizität, eine Parallelität, eine Ebenheit oder dergleichen handeln. Für ein Prüfelement können mehrere Prüfmerkmale vorgegeben bzw. zu vermessen sein.

Bevorzugt handelt es sich bei den hierin erwähnten Bereichen und insbesondere kritischen Bereichen um Oberflächenbereiche des Werkstücks, beispielsweise wenn das Werkstück optisch oder taktil vermessen wird. Die Bereiche können aber auch im Inneren eines Werkstückvolumens liegen, beispielsweise wenn das Werkstück mittels tomografischer Verfahren und insbesondere mittels Computertomografie (CT)-Verfahren vermessen werden soll.

Das Ermitteln der kritischen Bereiche, vorzugsweise aber auch das Festlegen von Vermessungsparametern, erfolgt bevorzugt automatisch, z.B. mittels der erwähnten Steuereinrichtung. Ein Vermessungsparameter kann ausschließlich für den kritischen Bereich entsprechend festgelegt werden. Nicht kritische Bereiche können hingegen mit bzw. gemäß einem ursprünglichen Vermessungsparameter (-wert) vermessen werden oder aber allgemein mit einem anderen Vermessungsparameter. Anders ausgedrückt kann der Vermessungsparameter somit lokal bzw. bereichsweise festgelegt und/oder angepasst werden, wobei sich diese Lokalität auf den kritischen Bereich bezieht. Folglich kann der Vermessungsparameter auch lokal bzw. bereichsweise variieren und z.B. während des Vermessungsprozesses entsprechend variierend eingestellt werden. Es kann aber auch vorgesehen sein, dass der Vermessungsparameter für das gesamte Werkstück entsprechend gewählt wird und nicht nur der kritische Bereich entsprechend vermessen wird. Hierdurch kann eine gewisse Stabilität aufgrund ausbleibender Vermessungsparametervariationen erreicht werden. Beispiele für festlegbare Vermessungsparameter werden nachstehend noch näher erläutert.

Das Verfahren kann ferner den Schritt umfassen, wenigstens ein weiteres artgleiches Werkstück mit dem entsprechend festgelegten Vermessungsparameter zu vermessen.

Gemäß einer Weiterbildung ist der Vermessungsparameter für den kritischen Bereich anders als für einen nichtkritischen Bereich des Werkstücks festgelegt. Beispielsweise kann der Vermessungsparameter verschiedene Werte für den kritischen und einen nichtkritischen Bereich aufweisen. Dies ist insbesondere dann vorteilhaft, wenn der Vermessungsparameter für den kritischen Bereich derart festgelegt wird, dass eine Messzeit hierfür erhöht wird (beispielsweise um genauere und/oder mehr Messsignale zu erzeugen). Für nicht kritische Bereiche kann der Vermessungsparameter hingegen anders festgelegt werden und dort z.B. eine schnellere Vermessung ermöglichen.

Erfindungsgemäß kann deshalb allgemein auch vorgesehen sein, dass Vermessungsparameter für nicht kritische Bereiche festgelegt werden. Beispielsweise kann je nachdem, ob ein Bereich nicht kritisch oder kritisch ist, der Vermessungsparameter derart gewählt werden, dass dieser Charakterisierung der Bereiche Rechnung getragen wird. Für kritische Bereiche können die Vermessungsparameter derart gewählt werden, dass eine höhere Messgenauigkeit (im Vergleich zu Vermessungsergebnissen nicht kritischer Bereiche) erzielbar ist und/oder als kritisch bewertete Eigenschaften besser erfasst werden können. Für nicht kritische Bereiche können die Vermessungsparameter hingegen derart gewählt werden, dass eine höhere Messgeschwindigkeit möglich ist (im Vergleich zu Vermessungsergebnissen kritischer Bereiche).

Allgemein kann aber vorgesehen sein, dass die Vermessungsparameter zumindest ausgewählter und nicht kritischer Bereiche denjenigen Vermessungsparametern entsprechen, die zum Erzeugen der Mehrzahl von Vermessungsergebnissen verwendet wurden, anhand derer dann kritische Bereiche ermittelt werden sollen. Anders ausgedrückt können lediglich in den kritischen Bereichen die Vermessungsparameter sozusagen lokal bzw. bereichsweise gegenüber dem anfänglichen Vermessen geändert werden.
Eine weitere Ausführungsform von Verfahren und Anordnung sieht vor, dass das Festlegen von wenigstens einem Vermessungsparameter des Koordinatenmessgeräts für den kritischen Bereich automatisch erfolgt. Dies kann umfassen, dass der Vermessungsparameter von einer erwähnten Steuereinrichtung festgelegt wird und/oder ohne dass manuelle Auswahlen getroffen werden müssen. Manuelle Bestätigungen nach erfolgter Festlegung z.B. zwecks einer Plausibilitätsüberprüfung können jedoch vorgesehen sein. Die automatische Festlegung kann anhand einer automatischen Prüfung der hierin geschilderten Kriterien und/oder allgemein regelbasiert erfolgen. Insbesondere können hierfür nachstehend erläuterte statistische Auswertungen durchgeführt werden und/oder Einheitlichkeitskenngrößen ermittelt werden und je nach den dabei erhaltenen Auswertungsergebnissen können dann automatisch Vermessungsparameter festgelegt werden. Hierzu kann z.B. auf vorab tabellarisch hinterlegte und/oder funktional definierte und/oder regelbasierte Zusammenhänge zurückgegriffen werden.

Zusätzlich oder alternativ kann vorgesehen sein, dass wenigstens ein weiteres artgleiches Werkstück basierend auf dem festgelegten Vermessungsparameter vermessen wird. Hierdurch kann eine Art Regelschleife implementiert werden, bei dem sich das Koordinatenmessgerät überwiegend selbständig bzw. automatisch hin zu einer geeigneten Messstrategie regelt. Dies kann dadurch erreicht werden, dass zunächst die Mehrzahl erhaltener Vermessungsergebnisse analysiert und darauf basierend der Vermessungsparameter für weitere Werkstückvermessungen geeignet festgelegt wird.

Eine Weiterbildung der Anordnung und des Verfahrens sieht vor, dass anhand der Vermessungsergebnisse eine ortsaufgelöste (oder, anders ausgedrückt, bereichsaufgelöste) Einheitlichkeitskenngröße der Vermessungsergebnisse der Werkstücke bestimmt wird. Unter ortsaufgelöst kann verstanden werden, dass die Einheitlichkeitskenngröße definierten Werkstückorten und insbesondere Werkstückbereichen zuordenbar ist und/oder für diese ermittelt wird bzw. diese beschreibt. Bei diesen Werkstückbereichen kann es sich um zueinander vergleichbare Werkstückbereiche handeln, die jedes Werkstück aufweist (z.B. um ein bei jedem Werkstück vorhandenes Prüfelement).

Dies erleichtert, dass zur Ermittlung kritischer Bereiche vergleichbare Orte/Bereiche der Werkstücke und insbesondere Vermessungsergebnisse für vergleichbare Orte/Bereiche der Werkstücke betrachtet und zum Beispiel statistisch ausgewertet werden können.

Weiter kann in diesem Zusammenhang vorgesehen sein, dass dann, wenn die Einheitlichkeitskenngröße ein vorbestimmtes Einheitlichkeitskriterium für einen Werkstückbereich (der einem Ort entsprechen oder mehrere Orte umfassen kann, für den/für die wenigstens eine ortsaufgelöste Einheitlichkeitskenngröße vorliegt) nicht erfüllt, dieser Werkstückbereich als kritischer Bereich ermittelt wird.

Gemäß einer weiteren Ausführungsform des Verfahrens und der Anordnung wird anhand der Vermessungsergebnisse eine Einheitlichkeitskenngröße der Vermessungsergebnisse wenigstens eines Werkstückbereichs bestimmt, insbesondere für zueinander vergleichbare Werkstückbereiche verschiedener Werkstücke. Wie erwähnt, können die Vermessungsergebnisse Werte für vorbestimmte Eigenschaften und insbesondere Prüfmerkmale eines Werkstücks bzw. von dessen Werkstückbereich angeben. Die Einheitlichkeitskenngröße kann angeben, inwieweit diese Werte variabel sind bzw. welche Bandbreite oder Streuung hiervon erhalten wird. Insbesondere kann es sich hierbei um eine statistische Kenngröße handeln, welche eine Verteilung der Vermessungsergebnisse beschreibt oder anhand dieser ermittelt wird. Hierfür werden bevorzugt Vermessungsergebnisse für ein gleichartiges Prüfmerkmal bzw. eine gleichartige Eigenschaft in vergleichbaren Bereichen der Werkstücke betrachtet (d. h die Werkstücke können verschiedene Werkstückbereiche umfassen, wobei ein Werkstückbereich zu wenigstens einem Werkstückbereich eines jeweiligen anderen Werkstücks vergleichbar ist oder, mit anderen Worten, über die Gesamtanzahl der Werkstücke betrachtet können Gruppen gebildet werden, die von jedem der Werkstücke wenigstens einen Werkstückbereich umfassen, wobei die Werkstückbereich einer Gruppe zueinander vergleichbar und/oder gleichartig sind).

Beispiele vergleichbarer Werkstückbereiche sind Prüfelemente unterschiedlicher Werkstücke, die vergleichbar zueinander sind und insbesondere gleiche Soll-Dimensionen aufweisen, wie zum Beispiel Bohrungen bzw. Kreise mit einem identischen Soll-Durchmesser.

Eine Einheitlichkeit oberhalb eines bestimmten Schwellenwerts kann anzeigen, dass die aktuelle Messstrategie geeignet ist. Eine Einheitlichkeitskenngröße, die z.B. unterhalb dieses Schwellenwerts liegt, kann hingegen anzeigen, dass die aktuelle Messstrategie nicht angemessen ist. Beispielsweise kann hierdurch eine unangemessen hohe Streuung der Vermessungsergebnisse angezeigt werden, wobei die Streuung ein Beispiel für die hierin diskutierte Einheitlichkeitskenngröße ist.

Andere Beispiele für die Einheitlichkeitsgröße, die allein oder in beliebiger Kombination vorgesehen sein können, sind ein Mittelwert, eine Varianz, eine Standardabweichung, eine Spannweite (d.h. eine Differenz zwischen einem Minimalwert und einem Maximalwert) von erhaltenen Vermessungsergebnisse (d.h. von erhaltenen Messwerten) sowie ein sogenannter CM- oder ein CMK-Wert, der die sogenannte Maschinenfähigkeit angibt. Es ist aber ebenso möglich, als Einheitlichkeitskenngröße lediglich den Minimalwert oder den Maximalwert der Vermessungsergebnisse für z.B. ein bestimmtes Prüfmerkmal über die vermessenen Werkstücke hinweg zu betrachten. Liegen diese Oberhalb (Maximalwert) oder unterhalb (Minimalwert) einer vorbestimmen Schwelle, kann ermittelt werden, dass innerhalb der Vermessungsergebnisse unerwünschte Ausreißer nach oben bzw. nach unten vorliegen und somit eine mangelnde Einheitlichkeit vorliegt.

Die Schwelle kann eine erwartete und/oder zulässige Toleranz definieren oder einen Sollwert. Letzteres kann insbesondere beim Betrachten eines Mittelwerts relevant sein, wobei der Mittelwert z.B. aus Vermessungsergebnissen bzw. Messwerten für ein bestimmtes Prüfmerkmal ermittelt wird.

Insbesondere kann ferner vorgesehen sein, dass dann, wenn die Einheitlichkeitskenngröße ein vorbestimmtes Einheitlichkeitskriterium nicht erfüllt, der (vergleichbare) Werkstückbereich (für sämtliche Werkstücke der gegebenen Art) als kritischer Bereich ermittelt wird. Wie vorstehend erläutert, kann es sich bei den vergleichbaren Werkstückbereichen um identische bzw. gleichartige Werkstückbereiche handeln, die jedes der artgleichen Werkstücke aufweist. Insbesondere kann es sich hierbei um gleichartige Prüfelemente der vorstehend erwähnten Art handeln. Durch Auswählen der vergleichbaren Werkstückbereiche wird sichergestellt, dass auch tatsächlich vergleichbare Vermessungsergebnisse miteinander verglichen bzw. ausgewertet werden, um eine Einheitlichkeit hiervon zu bewerten.

Das Einheitlichkeitskriterium kann ein Schwellenwert sein, den die Einheitlichkeitskenngröße nicht überschreiten und insbesondere nicht unterschreiten darf. Ist dies dennoch der Fall, ist das Einheitlichkeitskriterium nicht erfüllt und der betrachtete vergleichbare Werkstückbereich wird als kritischer Bereich ermittelt.

Insbesondere kann vorgesehen sein, dass das Einheitlichkeitskriterium einen zulässigen Maximalmittelwert und/oder eine zulässige Maximalvarianz der Vermessungsergebnisse definiert. Ab einem Überschreiten hiervon kann das Einheitlichkeitskriterium nicht mehr sein. Werden diese zulässigen Maximalgrößen überschritten, kann der Werkstückbereich demnach als kritischer Bereich ermittelt werden, da das Einheitlichkeitskriterium nicht länger erfüllt ist (d.h. die Vermessungsergebnisse zu uneinheitlich sind).

Eine weitere Ausführungsform des Verfahrens und der Anordnung sieht vor, dass beim Ermitteln eines kritischen Bereichs nicht nur ausschließlich die Vermessungsergebnisse z.B. im Sinne von Zahlenwerten und/oder auf Basis einer rein statistischen Auswertung betrachtet werden. Stattdessen können auch weitere Umstände berücksichtigt werden, anhand derer die Vermessungsergebnisse ermittelt wurden. Hierdurch kann z.B. die Wahrscheinlichkeit erhöht werden, dass ausreichend berücksichtigt wird, dass eine festgestellte mangelnde Einheitlichkeit nicht allein auf die vermessenen Werkstücke, sondern zumindest teilweise auf die Messvorrichtung und/oder Messstrategie zurückzuführen ist.

Insbesondere kann vorgesehen sein, dass beim Ermitteln eines kritischen Bereichs ein verwendeter Sensortyp berücksichtigt wird und insbesondere eine Messunsicherheit des Sensortyps. Hierdurch kann vermieden werden, dass Uneinheitlichkeiten in den Vermessungsergebnissen als unzulässig hoch interpretiert werden, die aber weder auf die gewählte Messstrategie noch das Werkstück zurückzuführen sind, sondern z.B. allein auf den Sensortyp. Beispielsweise kann das vorstehend erwähnte Einheitlichkeitskriterium basierend auf der Messunsicherheit geeignet angepasst werden, z.B. durch Erhöhen einer zulässigen Schwankung bzw. Streuung (und/oder eines zulässigen Maximalmittelwertes bzw. einer Maximalvarianz).

Gemäß einer Weiterbildung des Verfahrens und der Anordnung wird ein Werkstückbereich dann als kritischer Bereich ermittelt, wenn in diesem Werkstückbereich ein vorbestimmtes Fehlerbild ermittelt wird. In an sich bekannter Weise können anhand ermittelter Koordinatenwerte vorbestimmte Fehlerbilder z.B. eines Oberflächenprofils oder eines rekonstruierten Werkstückvolumens ermittelt werden. Im ersten Fall kann das Fehlerbild eine Welligkeit, eine Wölbung und/oder eine Rauheit sein und im Fall eines Werkstückvolumens ein Lunker. Ein vorbestimmtes Fehlerbild kann ferner dann vorliegen, wenn die Vermessungsergebnisse außerhalb eines zulässigen Toleranzbereichs liegen und/oder ein allgemein Nicht-in-Ordnungs-Kriterium erfüllen. Das Ermitteln kritischer Bereiche anhand von Fehlerbildern kann zusätzlich oder alternativ zu einer Ermittlung kritischer Bereiche basierend auf z.B. dem vorstehend genannten Einheitlichkeitskriterium oder anderweitigen Kriterien erfolgen.

Weiter kann vorgesehen sein, dass ein kritischer Bereich bereits dann festgelegt wird, wenn für nur ein Werkstück (oder für eine andere Mindestzahl von Werkstücken, die unterhalb der Gesamtanzahl von vermessenen gleichartigen Werkstücke liegt) in diesem Bereich ein entsprechendes Fehlerbild erkannt wurde. Es können beliebige andere Anzahlen von Werkstücken definiert werden, die dieses Fehlerbild aufweisen müssen, um für sämtliche Werkstücke den entsprechenden Bereich als kritischen Bereich zu definieren (z.B. wenigstens 5 oder auch sämtliche Werkstücke).

Eine weitere Ausführungsform der Anordnung und des Verfahrens sieht vor, dass anhand der Vermessungsergebnisse vorzugsweise automatisiert Eigenschaften eines Oberflächenprofils rekonstruierten Werkstückvolumens (bei CT-Messungen) eines jeden Werkstücks und darauf basierend ein kritischer Bereich ermittelt wird. Hierfür können insbesondere Vermessungsergebnisse in Form von Oberflächenkoordinaten oder aber CT-Messungen verwendet werden. Bei der Eigenschaft kann es sich um z.B. die vorstehend erwähnte Welligkeit, Wölbung, Lunker, und/oder Rauheit handeln. Varianten zur Fehlerbilderkennung oder zur Eigenschaftserkennung von Oberflächenprofilen und Werkstückvolumen stellen eine zuverlässige und effektive Möglichkeit dar, um kritische Werkstückbereiche zu ermitteln.

Wie erwähnt, kann allgemein vorgesehen sein, dass sich der Vermessungsparameter auf den Vermessungsprozess zum Erfassen von Messsignalen richtet.

In diesem Zusammenhang (aber auch unabhängig davon, d.h. allgemein und ohne den vorstehenden Bezug auf Messsignale) kann der Vermessungsparameter gemäß einer der nachstehenden Varianten gewählt sein. Der Vermessungsparameter kann den nachstehenden Beispielen entsprechen bzw. als ein entsprechender Parameter definiert sein oder aber die nachstehenden Beispiele und Parameter zumindest mittelbar definieren oder beschreiben.

Gemäß einer Variante ist und/oder definiert der Vermessungsparameter z.B. ein zum Vermessen verwendeter Sensortyp sein. Beispielsweise kann dann, wenn ein kritischer Bereich ermittelt wurde, ein Sensortyp mit einer erhöhten Messgenauigkeit und/oder einer anderweitig für diesen Bereich geeigneten Messeigenschaft ausgewählt und der Vermessungsparameter "Sensortyp" entsprechend festgelegt werden. Das Koordinatenmessgerät kann dann das gesamte Werkstück mit diesem Sensortyp vermessen oder aber beim Erreichen des kritischen Bereichs von einem Sensortyp für nichtkritische Bereiche zu einem Sensortyp für den kritischen Bereich wechseln. Insbesondere kann vorgesehen sein, dass der Sensortyp nach Maßgabe eines erkannten Fehlerbildes oder erkannten Eigenschaften des Oberflächenprofils ausgewählt wird.

Als Sensortyp können auch Sensoren mit unterschiedlichen Messkugeldurchmessern gewählt werden oder allgemein mit unterschiedlichen (taktilen) Tasterdurchmessern. Beispielsweise können im kritischen Bereich Tasterdurchmesser gewählt werden, die für eine genauere Welligkeitserkennung geeignet sind (z.B. ein kleinerer Tasterdurchmesser).

Weiter kann als Vermessungsparameter Anzahl von Messbildern im kritischen Bereich festgelegt werden. Diese kann erhöht werden, um mehr auswertbare Messsignale für diesen Bereich zu erzeugen (im Vergleich zu nicht kritischen Bereichen).

Der Vermessungsparameter kann auch die Messgeschwindigkeit sein und/oder definieren und insbesondere eine Scanninggeschwindigkeit. Insbesondere kann vorgesehen sein, dass die Messgeschwindigkeit für den kritischen Bereich gegenüber nichtkritischen Bereichen verringert wird.

Weiter kann ein optischer oder taktiler Messbereich als Vermessungsparameter definiert sein und/oder von diesem definiert werden. Insbesondere kann dieser derart angepasst werden, dass in einem kritischen Bereich die Anzahl von Antastpunkten erhöht wird und/oder dass der Messbereich (oder, anders ausgedrückt, Antastbereich) allgemein den gesamten kritischen Bereich abdeckt. Ebenso kann vorgesehen sein, dass der Messbereich zumindest anteilig in dem kritischen Bereich liegt. Unter einem Messbereich kann derjenige Bereich verstanden werden, in dem vorgegebene Mess- bzw. Antastpunkte liegen. Eine Werkstückvermessung kann sich aus mehreren Messbereichen zusammensetzen, zum Beispiel einer je zu vermessendem Prüfelement oder Prüfmerkmal. Der Messbereich kann ein Bereich sein, in dem vermessene und insbesondere angetastete Punkte eines Werkstücks liegen.

Der Vermessungsparameter kann auch eine Anzahl von Messpunkten sein und/oder definieren. Diese kann in dem kritischen Bereich erhöht werden, wohingegen in nicht kritischen Bereichen die Anzahl von Messpunkten gegenüber dem anfänglichen Vermessen gleichbleiben oder sogar reduziert werden kann.

Der Vermessungsparameter kann auch einen Scanningbereich und insbesondere eine Position und/oder Größe (bzw. Ausdehnung) hiervon betreffen. Unter einem Scannen bzw. scannenden Messen wird allgemein eine zumindest vorübergehend kontinuierliche und insbesondere über eine gewisse Strecke dauerhaft anliegende taktile Vermessung eines Werkstücks verstanden, bei der unter Aufrechterhaltung einer Relativbewegung von Werkstück und Koordinatenmessgerät fortlaufend bzw. in regelmäßigen und insbesondere kurz aufeinanderfolgenden Intervallen Messsignale erzeugt werden, ohne den taktilen Kontakt zwischen Taster und Werkstück aufzuheben. Anders ausgedrückt streift bzw. gleitet der Taster entlang der Oberfläche des Werkstücks und liefert dabei fortlaufend Messsignale.

Gemäß dieser Variante kann vorgesehen sein, dass mittels des Vermessungsparameter in dem (vormals gegebenenfalls nicht scannend vermessenen) kritischen Bereich überhaupt ein Scanningbereich definiert wird, oder aber dass ein Scanningbereich auf den kritischen Bereich reduziert wird und/oder dort noch einmal verdichtet wird, z.B. durch enger aneinander liegende Scanningbahnen.

Da es sich bei einem scannenden Messen um einen vergleichsweise zeitintensiven Messvorgang handelt, kann hierdurch erreicht werden, dass nur dort, wo diese im Vergleich genauere Messform tatsächlich benötigt wird (nämlich im kritischen Bereich) entsprechend zeitintensiv gemessen wird. Außerhalb des kritischen Bereichs kann hingegen z.B. durch lediglich punktuelles Antasten gemessen werden oder aber mit weiter voneinander beanstandeten Scanningbahnen. Allgemein formuliert kann also der Scanningbereich derart angepasst werden, dass darauf basierend der kritische Bereich mit einer erhöhten Genauigkeit vermessen wird, wohingegen bevorzugt wird, dass nichtkritische Bereiche weniger genau und beispielsweise nicht-scannend vermessen werden.

Weiter kann der Vermessungsparameter eine Auflösung eines Sensors und insbesondere eines optischen Sensors sein und/oder definieren. Diese Auflösung kann für den kritischen Bereich erhöht werden. Eine erhöhte Auflösung kann eine längere Messzeitdauer und/oder Auswertzeitdauer bedeuten oder aber auch die Anfälligkeit für Messfehler erhöhen. Deshalb vorgesehen sein kann, die Auflösung lediglich für den kritischen Bereich zu erhöhen und den nicht kritischen Bereich mit einer im Vergleich geringeren Auflösung zu messen. Insbesondere kann aber vorgesehen sein, für den kritischen Bereich einen Sensor mit einer höheren Auflösung zu verwenden und für den nichtkritischen Bereich einen Sensor mit einer niedrigeren Auflösung, d.h. der Sensortyp kann entsprechend für den kritischen Bereich gewechselt werden.

Weiter kann vorgesehen sein, dass der Vermessungsparameter ein Bildausschnitt eines Sensors ist und insbesondere eines optischen Sensors und/oder einen solchen Bildausschnitt definiert. Insbesondere kann der Vermessungsparameter eine Lage und/oder Größe dieses Bildausschnitts definieren oder dieser entsprechen. Beispielsweise kann der Bildausschnitt auf den kritischen Bereich festgelegt werden, um hierfür wenigstens einen Ausschnitt zu erzeugen, der dann gezielt und/oder gegebenenfalls aufwendiger ausgewertet wird als Bildausschnitte mit dem gesamten Werkstück oder aber Bildausschnitte enthaltend nichtkritische Bereiche.

Bei dem Bildausschnitt kann es sich um den Ausschnitt eines existierenden (d. h. bereits aufgenommen) Bildes handeln, der dann zum Beispiel mittels genauerer Auswerteverfahren ausgewertet wird, als andere (nichtkritische) Ausschnitte dieses Bildes. Ebenso kann der Bildausschnitt aber einen Ausschnitt eines Erfassungsbereichs des verwendeten Sensors definieren, sodass dieser ein Bild für bzw. gemäß diesem Bildausschnitt erfasst, welches dann gegenüber Bildern des gesamten Werkstücks oder Bildern nichtkritischer Bereiche gesondert und vorzugsweise genauer ausgewertet wird.

Weiter kann der Vermessungsparameter eine Beleuchtungseinstellung eines optischen Sensors sein und/oder definieren. Insbesondere kann eine für ein erkanntes Fehlerbild angemessene Beleuchtung gewählt werden oder aber eine Beleuchtung, die eine höhere Erfassungszeitdauer und/oder eine effektivere Erfassung ermöglicht, um genauere Aufnahme des kritischen Bereichs zu erzeugen. Für nichtkritische Bereiche können hingegen weniger genaue und/oder schneller erzeugbare Bildaufnahmen akzeptabel sein.

Weiter kann auch eine Bahnsteuerung einer den Sensor bewegenden kinematischen Einheit (wie zum Beispiel ein KMG-Portal, ein CNC-Bewegungsapparat, eine Maschineachsenanordnung oder ein Industrieroboter) als Vermessungsparameter dienen bzw. hiervon definiert werden. Insbesondere kann die Bahnsteuerung die Bewegungsbahn des Sensors über entsprechendes Ansteuern der kinematischen Einheit festlegen. Insbesondere kann die Festlegung derart erfolgen, dass eine Lage oder Größe des Erfassungsbereichs des Sensors und/oder eine Lage oder Anzahl der vom Sensor aufgenommenen Messpunkte an den ermittelten kritischen Bereich und insbesondere dessen Lage oder Größe angepasst wird. Zusätzlich oder alternativ kann bei dieser Variante die Bahnsteuerung derart angepasst werden, sodass der Sensor zu dem kritischen Bereich in geeigneter Weise ausgerichtet und/oder relativ hierzu bewegt wird (beispielsweise wenn der Scanningbereich, Messbereich oder Antastbereich bzw. die Lage von Messpunkten für den kritischen Bereich gesondert angepasst wird).

Eine weitere Ausführungsform der Anordnung und des Verfahrens sieht vor, dass sich der Vermessungsparameter auf das Auswerten von Messsignalen zum Erzeugen von Vermessungsergebnissen richtet. In diesem Zusammenhang, aber auch unabhängig davon (d.h. ohne dass sich der Vermessungsparameter zwingend auf das Auswerten von Messsignalen richtet), kann der Vermessungsparameter eine Lage des ausgewerteten Bildbereichs (oder, mit anderen Worten, Bildausschnitts) sein. Dies kann auch als Wahl einer sogenannten Region of Interest beschrieben werden. Wird ein Bild des Werkstücks erhalten und insbesondere eines, das den kritischen Bereich abbildet, kann der ausgewertet Bildbereich auf den kritischen Bereich reduziert werden.

Weiter kann der Vermessungsparameter eine Lage eines ausgewerteten Suchvolumens in einem Volumendatensatz sein und/oder definieren. Dieser kann analog zum vorstehenden ausgewerteten Bildbereich gewählt sein bzw. die ausgewertete Region of Interest definieren. Auch in diesem Fall kann das Suchvolumen auf einen identifizierten kritischen Bereich reduziert werden.

Weiter kann der Vermessungsparameter eine Bildauswerteeinstellung zum Ermitteln vorbestimmter zu vermessener Eigenschaften und/oder zu detektierender Fehler sein bzw. definieren. Dies kann allgemein als Bildauswerteeinstellung zum Ermitteln vorbestimmter Merkmale zusammengefasst werden. Beispielsweise können hierüber bestimmte per Bilderkennung zu erkennende Messpunkte oder Muster festgelegt werden, die zum Ermitteln gewünschter Prüfmerkmale auszuwerten bzw. zu bestimmen sind. Hierbei kann es sich z.B. um entlang eines Kreisdurchmessers liegende Punkte, Eckpunkte oder dergleichen handeln. Diese können mittels bekannter Bildauswertealgorithmen und insbesondere Mustervergleichsverfahren ermittelt werden. Die Bildauswerteeinstellung kann hierbei für den kritischen Bereich derart gewählt sein, dass eine höhere Ermittlungs- bzw. Erkennungsgenauigkeit erzielbar ist, gegebenenfalls auch auf Kosten einer erhöhten Rechendauer. Beispielsweise kann die Anzahl an Vergleichsmustern oder allgemein die zulässige Rechendauer für den kritischen Bereich als eine entsprechende Bildauswerteeinstellung erhöht werden.

Ferner kann der Vermessungsparameter eine Lage und/oder Anzahl von zur Auswertung berücksichtigten Messpunkten sein und/oder definieren. Dies betrifft insbesondere den Fall eines rekonstruierten Volumendatensatzes, aus dem dann lediglich einzelne Messpunkte zur Auswertung ausgewählt werden. Ebenso können aber taktil und insbesondere scannend oder aber per optischer Erfassung und insbesondere per Bilderfassung gewonnene Messdaten bzw. Messpunkte entsprechend für eine weitergehende Auswertung ausgewählt werden. Beispielsweise kann vorgesehen sein, dass in dem kritischen Bereich die Anzahl zur Auswertung berücksichtigter Messpunkte erhöht wird. Ebenso kann die Lage berücksichtigter Messpunkte in dem kritischen Bereich konzentriert werden (d.h. mehr ausgewertete Messpunkte können in dem kritischen Bereich als in den nichtkritischen Bereichen liegen). In diesem Fall können die Messpunkte ausgewertete Punkte z.B. einer Bilddatei oder eines Volumendatensatzes sein.

Die Lage und/oder Anzahl von zur Auswertung berücksichtigten Messpunkten kann bspw. anhand wenigstens eines der folgenden Kriterien angepasst werden:
- eine erwartete (und/oder anhand der Einheitlichkeitskenngröße ermittelte) Unsicherheit, insbesondere Messunsicherheit, und/oder eine geforderte (Mess-) Genauigkeit. Je höher, desto höher kann jeweils die Anzahl von Messpunkten ausfallen und desto mehr Messpunkte können im kritischen Bereich positioniert werden;
- eine Material- und/oder Oberflächeneigenschaft (z.B. einer Rauheitskenngröße) des Werkstücks. Hier können z.B. bei erhöhter Rauheit die Anzahl von Messpunkten erhöht werden;
- eine Art eines Bearbeitungsprozesses des Werkstücks. Hieraus sind dann z.B. Rückschlüsse auf die vorstehend genannten beiden Kriterien und deren Größen möglich.

Weiter kann der Vermessungsparameter eine Filtereinstellung sein. Für den kritischen Bereich kann diese z.B. derart gewählt werden, dass ein dort erkanntes Fehlerbild oder eine Oberflächenprofil-Eigenschaft geeignet berücksichtigt werden kann. In an sich bekannter Weise dient das Filtern von Messwerten insbesondere zur Trennung von Gestaltabweichungen verschiedener Ordnung. Zusätzlich und alternativ kann es zum Ausgleichen zufälliger Messabweichungen und/oder zum Erkennen von Ausreißern eingesetzt werden.

Für einen taktil scannenden oder optischen Punktsensor können bekanntermaßen 2D-Linearfilter, Spline-Filter oder Gauss-Filter eingesetzt werden. Bei Kamerasensoren kann ein Bildfilter und bei flächigen Daten, wie sie z.B. in Form einer Punktewolke oder in Form von CT-Volumendaten vorliegen können, kann ein Flächenfilter eingesetzt werden. Die Filtereinstellung kann derart gewählt werden, dass der Filter z.B. entweder als Tiefpass-, Hochpass- oder Bandpassfilter eingerichtet ist. Die Filtereinstellung kann derart gewählt werden, dass im kritischen Bereich eine genauere Oberflächenerfassung möglich ist, d.h. weniger Messwerte herausgefiltert werden. Alternativ oder zusätzlich können die Filtereinstellungen zum Erkennen von Welligkeit oder Wölbung im kritischen Bereich angepasst werden, insbesondere derart, dass diese Fehlerbilder mit einer höheren Genauigkeit erfassbar sind. Anders ausgedrückt kann also die Filterkennlinie im kritischen Bereich für eine genauere Erfassung eingerichtet sein, d.h. einen größeren Durchlassbereich aufweisen, als dies in nichtkritischen Bereichen der Fall ist.

Weiter kann auch allgemein eine Ausreißereinstellung festgelegt sein, also z.B. in Form einer Schwelle, ab deren Über- oder Unterschreiten ein Messwert aus Ausreißer betrachtet wird oder nicht. Im Fall von dem kritischen Bereich kann diese Schwelle z.B. herabgesetzt werden, um eine präzisere Erkennung etwaiger Ausreißer zu ermöglichen.

Die Erfindung betrifft schließlich auch eine Anordnung zur Werkstückvermessung, die ein Koordinatenmessgerät und eine Steuereinrichtung umfasst, wobei die Steuereinrichtung dazu eingerichtet ist, ein Verfahren gemäß jeglichen der hierin geschilderten Aspekte auszuführen. Die Steuereinrichtung kann von dem Koordinatenmessgerät umfasst oder hiermit verbunden bzw. verbindbar sein. Es kann sich um einen herkömmlichen PC handeln. Allgemein kann die Steuereinrichtung wenigstens einen Prozessor umfassen und/oder gemäß jeglicher der hierin geschilderten Varianten ausgebildet sein (siehe z.B. vorstehende Ausführungen). Insbesondere kann die Steuereinrichtung dazu eingerichtet sein, ein Verfahren zum Festlegen von Vermessungsparametern für ein Koordinatenmessgerät durchzuführen, bei dem die Schritte des beigefügten unabhängigen Verfahrensanspruchs sowie sämtlicher weiterer Verfahrensansprüche und Verfahrensaspekte ausgeführt werden. Folglich kann die Steuereinrichtung dazu eingerichtet sein, zumindest folgendes auszuführen:
- Erhalten einer Mehrzahl von Vermessungsergebnissen, die durch reales oder simuliertes Vermessen einer Mehrzahl von artgleichen Werkstücken gewonnen wurden;
- Ermitteln von wenigstens einem für das Vermessen kritischen Bereich der Werkstücke anhand der Vermessungsergebnisse (zum Beispiel mittels einer automatisierten statistischen Analyse der Vermessungsergebnisse); und
- (Vorzugsweise automatisiertes) Festlegen von wenigstens einem Vermessungsparameter des Koordinatenmessgeräts zum Vermessen des kritischen Bereichs (zum Beispiel in einem sogenannten digitalen Prüfplan oder allgemein als ein Steuerungsparameter des Koordinatenmessgeräts).

Die Steuereinrichtung kann zur Durchführung des Verfahrens sämtliche hierin geschilderten Einstellungen vornehmen und/oder sämtliche verwendeten Einheiten (z.B. den Sensor, eine Auswerteeinrichtung, eine kinematische Einheit zur Sensorbewegung, eine Beleuchtungsquelle und dergleichen) geeignet ansteuern, um sämtliche hierin geschilderten Verfahrensschritte, Funktionen und Betriebszustände bereitzustellen.

Die Erfindung wird im Folgenden anhand der beigefügten Figuren erläutert. Darin können gleichartige oder gleichbleibende Merkmale mit gleichen Bezugszeichen versehen sein.
- Fig. 1: zeigt ein Ablaufschema eines erfindungsgemäßen Verfahrens, das mit einer erfindungsgemäßen Anordnung durchgeführt wird, wobei für einzelne Verfahrensschritte gesonderte Zustandsdarstellungen gezeigt sind;
- Fig. 2: zeigt eine zu Fig. 1 analoge Darstellung, bei der Verfahrensparameter gemäß einer weiteren Ausführungsform automatisch festgelegt werden; und
- Fig. 3: zeigt ein weiteres Ausführungsbeispiel eines erfindungsgemäßen Verfahrens.

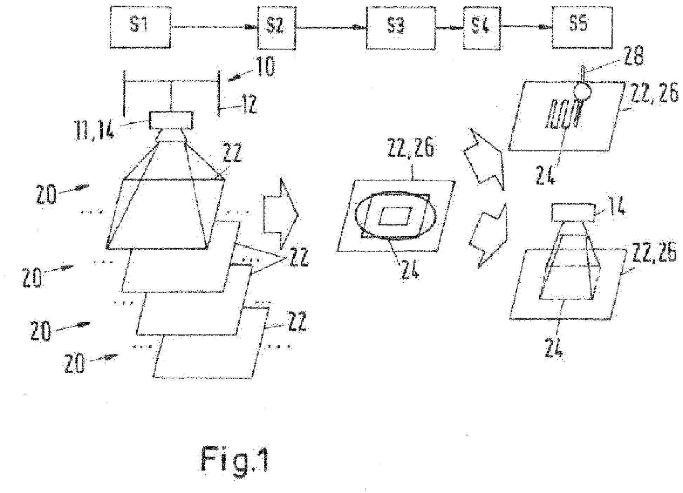

In Fig. 1 ist eine erfindungsgemäße Anordnung 10 zwecks Zustandsdarstellung während insbesondere Schritt S1 und S2 schematisch angedeutet. Die Anordnung 10 umfasst ein stark vereinfacht abgebildetes Koordinatenmessgerät 12 in Portalbauweise, das eine kinematische Einheit zum Bewegen eines Sensors 11 und in diesem Fall eines optischen Kamerasensors bzw. einer Kamera 14 relativ zu einem Werkstück 20 bereitstellt.

Das Werkstück 20 ist in Fig. 1 nicht vollständig abgebildet, sondern nur als von der Kamera 14 erfasstes Oberflächensegment 22 dieses Werkstücks 20. Das Werkstück 20 wird mittels entsprechender Bildaufnahme bereichsweise erfasst (d.h. für jedes Werkstück 20 werden mehrere Oberflächensegmente 22 per entsprechender Bildaufnahme erfasst). Dies ist in Fig. 1 durch entsprechende Punkte angedeutet, die auf eine Mehrzahl von (nicht gezeigten) Oberflächensegmenten 22 je Werkstück 20 hindeuten sollen.

Ferner ist angedeutet, dass eine Mehrzahl von gleichartigen Werkstücken 20 in analoger Weise erfasst und vermessen wird (d.h. durch Erfassen mehrerer und insbesondere vergleichbar positionierter und dimensionierter Oberflächensegmente 22). Es handelt sich dabei um artgleiche Werkstücke 20, d.h. Werkstücke 20 aus einer Serienfertigung.

In an sich bekannter Weise werden dabei für die Werkstücke 20 Bildausschnitte vorab festgelegt, je nachdem, in welchem Oberflächenbereich bzw. welche Oberflächensegmente 22 der Werkstücke 20 relevante Prüfelemente (z.B. eine kreisförmige Bohrung) enthalten, für die vorbestimmte Prüfmerkmale (zum Beispiel ein Durchmesser) ermittelt werden sollen. Jedes der Werkstücke 20 wird dann in der gleichen Weise und insbesondere in den gleichen Oberflächensegmenten 22 vermessen. Die erfassten Bildaufnahmen werden ferner den einzelnen Oberflächensegmenten 22 zugeordnet.

Insgesamt liegen somit in einem Schritt S2 für identische bzw. vergleichbare Bereiche, die durch die Oberflächensegmente 22 gebildet werden, sämtlicher Werkstücke 20 Bildaufnahmen vor, die Messdaten für die entsprechenden Bereiche darstellen.

Für jeden Werkstückbereich bzw. jedes Oberflächensegment 22 werden dann die dazugehörigen Messdaten in Schritt S3 zunächst werkstückspezifisch ausgewertet. Hierdurch werden Vermessungsergebnisse erhalten, die jeweils einem Werkstück 20 und auch einem spezifischen von dessen Werkstückbereich bzw. Oberflächensegment 22 zuordenbar sind. Beispielsweise werden für jedes Werkstück 20 und für jedes Oberflächensegment 22 Koordinatenwerte von wenigstens einem vorbestimmten Merkmal, Messpunkt oder allgemein einem Teilbereich, wie er in Fig. 1 mit 24 umrissen ist, ermittelt. Dies erfolgt in an sich bekannter Weise mittels Bildauswertealgorithmen. Der Teilbereich 24 kann ebenfalls einen vergleichbaren Werkstückbereich im Sinne dieser Offenbarung darstellen, da er bei jedem der Werkstücke 20 vorhanden ist und hierfür auch jeweils Vermessungsergebnisse bestimmt werden.

In einem Schritt S4 werden dann für jedes Oberflächensegment 22 (d.h. jedes Oberflächensegment 22, das in sämtlichen Werkstücken 20 in vergleichbarer Weise vorhanden ist) die erhaltenen Vermessungsergebnisse sämtlicher Werkstücke 20 gemeinsam betrachtet. Genauer gesagt erfolgt eine statistische Auswertung der auf jedes Oberflächensegment 22 beim Vermessen sämtlicher Werkstücke 20 erhaltenen Vermessungsergebnisse.

Insbesondere wird in der vorstehend allgemein erläuterten Weise ermittelt, ob diese Vermessungsergebnisse ein vorbestimmtes Einheitlichkeitskriterium erfüllen. Beispielsweise wird im vorliegenden Fall wenigstens ein Koordinatenwert je Oberflächensegment 22 betrachtet und es wird dann ermittelt, inwieweit die vergleichbaren Koordinatenwerte für jedes Werkstück 20 in diesem Oberflächensegment 22 variieren bzw. streuen.

Genauer gesagt wird eine Varianz ermittelt oder wird alternativ ein Mittelwert der ermittelten Koordinatenwerte betrachtet. Diese stellen jeweils eine Einheitlichkeitsgröße der ermittelten Vermessungsergebnisse dar. Erfüllen diese ein Einheitlichkeitskriterium nicht mehr (d.h. liegen sie z.B. oberhalb von einem zulässigen maximalen Mittelwert oder einer zulässigen maximalen Varianz), wird der Bereich bzw. das Oberflächensegment 22 als kritischer Bereich 26 eingestuft. Im vorliegenden Fall kann sich der kritische Bereich 26 auf den umkreisten Teilbereich 24 beschränken, für den Koordinatenwerte ermittelt wurden und/oder in dem die Koordinatenwerte besonders stark streuen. Ist dies nicht der Fall, wird dieses Oberflächensegment 22 hingegen als unkritisch bzw. nichtkritisch eingestuft.

In einem Schritt S5 erfolgt daraufhin eine automatische Anpassung der Messstrategie. Genauer gesagt wird wenigstens ein Vermessungsparameter für einen kritischen Bereich 26, sofern vorhanden, automatisch geeignet angepasst, ohne dass es manueller Eingriffe bedarf.

In Fig. 1 sind zwei mögliche Anpassungen gezeigt. Im oberen Fall wird für ein als kritisch eingestuftes Oberflächensegment 22 zunächst ein anderer Sensortyp verwendet, nämlich ein taktil antastender Taststift 28. Dieser führt in dem Oberflächensegment 22 ein scannendes taktiles Antastverfahren durch, was genauer sein kann, als die ursprüngliche Bilderfassung des gesamten Oberflächensegments 22.

Im unteren Fall wird hingegen der Bilderfassungsbereich des optischen Kamerasensors 14 eingeschränkt zwar bevorzugt auf den kritischen Unterbereich 24 des Oberflächensegments 22. Alternativ könnte auch ein anderer Kamerasensor mit einer höheren Auflösung verwendet werden.

Allgemein kann die Erfindung auch vorsehen, in den Oberflächensegmenten 22 sämtliche Koordinatenwerte zu ermitteln, um dann als einen kritischen Bereich denjenigen Unterbereich 24 zu ermitteln, in dem die Koordinatenwerte vergleichbarer Oberflächensegmente 22 der Werkstücke 20 ein Einheitlichkeitskriterium nicht länger erfüllen.

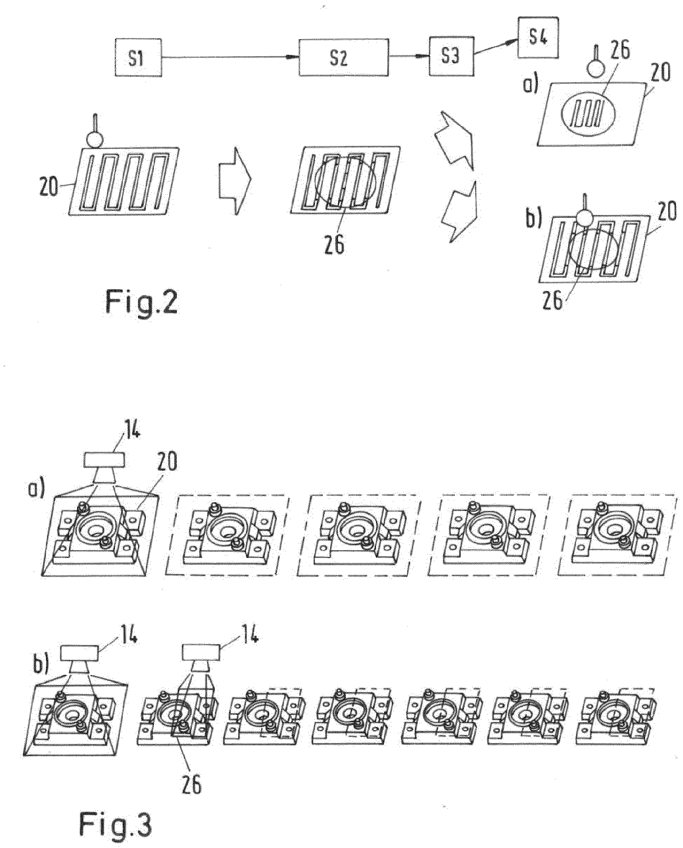

Das Berücksichtigen von Oberflächensegmenten 22 ist nicht zwingend und wurde vorstehend lediglich beispielhaft erläutert. Es kann ebenso vorgesehen sein, zunächst ein gesamtes Werkstück 20 per Bilderfassung zu erfassen und dann lediglich einzelne gezielte Bereiche hiervon als kritischer Bereich 26 zu identifizieren und mit automatisch angepassten Vermessungsparameter gesondert zu vermessen. Dies wird beispielhaft anhand der nachstehenden Figur 3 erläutert.

Zunächst bezugnehmend auf Fig. 2 wird eine weitere Variante eines erfindungsgemäßen Verfahrens mit einer analogen Darstellung zu Fig. 1 erläutert.

In einem Schritt S1 wird ein Werkstück 20 zumindest teilweise taktil scannend vermessen. Dies erfolgt wiederum für eine Mehrzahl artgleicher Werkstücke 20 und auch in vergleichbaren Oberflächenbereichen, was in Fig. 2 jedoch nicht gesondert dargestellt ist.

In einem Schritt S2 werden dann die Messergebnisse sämtlicher Werkstücke 20 miteinander verglichen. Insbesondere erfolgt eine statistische Auswertung dieser Vermessungsergebnisse, bei denen es sich im gezeigten Fall wiederum um Koordinatenwerte der Werkstücke 20 in dem scannend vermessenden Bereich handelt. in In Schritt S3 wird ein Bereich ermittelt, in dem diese Vermessungsergebnisse eine unzulässig hohe Streuung aufweisen, und dieser Bereich wird als kritischer Bereich 26 festgelegt. Alle anderen, diesen Bereich 26 umgebenden Bereiche bilden hingegen nichtkritische Bereiche.

In einem Schritt S4 wird daraufhin gemäß einer ersten Variante als Vermessungsparameter für den kritischen Bereich 26 automatisch der Scanningbereich eingeschränkt. Anders ausgedrückt wird der Scanningbereich auf diesen kritischen Bereich 26 reduziert. In den umgebenden nichtkritischen Bereichen kann hingegen eine andere, weniger genaue Vermessung erfolgen, z.B. eine lediglich punktuelle Antastung oder auch eine rein optische Erfassung. Gemäß der unteren Variante in Fig. 2 wird hingegen weiterhin das gesamte Werkstück 20 bzw. dessen ursprünglich vermessener Werkstückbereich scannend angetastet. Allerdings wird der Scanningvorgang in dem kritischen Bereich 26 für eine höhere Messgenauigkeit angepasst. Hierfür wird in dem gezeigten Beispiel die Scanngeschwindigkeit reduziert und/oder die Anzahl scannend erfasster Messpunkte (d.h. die Antastfrequenz) erhöht und/oder wird ein Abstand der Scanningbahnen zueinander verringert.

In Fig. 3 ist eine weitere Variante eines erfindungsgemäßen Verfahrens gezeigt. In der oberen Reihe a) ist zunächst gezeigt, dass eine Anzahl artgleicher Werkstücke 20 vollständig mittels eines Kamerasensors 14 erfasst wird. Es werden dann Vermessungsergebnisse für jedes Werkstück 20 ermittelt. Insbesondere werden vorbestimmte Prüfelemente per Bildauswertung erfasst und werden hierfür ebenfalls per Bildauswertung bestimmte Prüfmerkmale ermittelt. Wird erkannt, dass vergleichbare Prüfmerkmale der Werkstücke 20 stark streuen (d.h. dass die die Vermessungsergebnisse darstellenden Werte der Prüfmerkmale sich werkstückübergreifend stark voneinander unterscheiden), wird für ein entsprechend streuendes Prüfmerkmal dann ein höher auflösender Kamerasensor 14 gewählt.

Dies ist in der unteren Reihe b) gezeigt. Nach wie vor wird das gesamte Werkstück 20 mit einem Kamerasensor 14 erfasst, insbesondere um Eigenschaften nichtkritischer Bereiche und/oder nichtkritischer Prüfelemente bzw. Prüfmerkmale zu erfassen. In einem als kritisch identifizierten Bereich 26, der ein stark streuendes Prüfmerkmal enthält, wird hingegen ein höher auflösender Kamerasensor 14 eingesetzt. Alternativ könnte auch ein Bildausschnitt des ursprünglich verwendeten Kamerasensors 14 geeignet angepasst und auf den kritischen Bereich 26 reduziert werden, um darin eine genauere Auswertung vorzunehmen.

## Patentansprüche

1. Verfahren zum Festlegen von Vermessungsparametern für ein Koordinatenmessgerät (12), mit:
- Erhalten einer Mehrzahl von Vermessungsergebnissen, die durch reales oder simuliertes Vermessen einer Mehrzahl von artgleichen Werkstücken (20) gewonnen wurden;
- Ermitteln von wenigstens einem für das Vermessen kritischen Bereich (26) der Werkstücke (20) anhand der Vermessungsergebnisse; und
- Festlegen von wenigstens einem Vermessungsparameter des Koordinatenmessgeräts (12) zum Vermessen des kritischen Bereichs (26), **dadurch gekennzeichnet, dass**
der Vermessungsparameter einer der folgenden ist oder einen der folgenden definiert:
- ein zum Vermessen verwendeter Sensortyp;
- eine Messgeschwindigkeit, insbesondere eine Scanninggeschwindigkeit;
- einen Messbereich und/oder eine Lage von Messpunkten;
- eine Anzahl von Messpunkten und/oder Messbildern;
- ein Scanningbereich;
- eine Auflösung eines verwendeten optischen Sensors (11);
- einen Bildausschnitt eines optischen Sensors (11);
- eine Beleuchtungseinstellung eines optischen Sensors (11);
- eine Bahnsteuerung einer den Sensor (11) bewegenden kinematischen Einheit, und/oder
dass sich der Vermessungsparameter auf das Auswerten von Messsignalen zum Erzeugen von Vermessungsergebnissen richtet, wobei der Vermessungsparameter einer der folgenden ist oder einen der folgenden definiert:
- eine Lage eines ausgewerteten Bildbereichs;
- eine Lage eines ausgewerteten Suchvolumens in einem Volumendatensatz;
- eine Bildauswerteeinstellung zum Ermitteln vorbestimmter Merkmale;
- eine Lage und/oder Anzahl von zur Auswertung berücksichtigten Messpunkten;
- eine Filtereinstellung.

2. Verfahren nach Anspruch 1, wobei der Vermessungsparameter für den kritischen Bereich (26) anders als für einen nichtkritischen Bereich des Werkstücks (20) festgelegt ist.

3. Verfahren nach Anspruch 1 oder 2, wobei das Festlegen von wenigstens einem Vermessungsparameter des Koordinatenmessgeräts (12) für den kritischen Bereich (26) automatisch erfolgt und/oder wobei wenigstens ein weiteres artgleiches Werkstück (20) basierend auf dem festgelegten Vermessungsparameter vermessen wird.

4. Verfahren nach einem der vorangehenden Ansprüche, wobei anhand der Vermessungsergebnisse eine ortsaufgelöste Einheitlichkeitskenngröße der Vermessungsergebnisse der Werkstücke (20) bestimmt wird.

5. Verfahren nach Anspruch 4, wobei dann, wenn die Einheitlichkeitskenngröße ein vorbestimmtes Einheitlichkeitskriterium für einen Werkstückbereich nicht erfüllt, dieser Werkstückbereich als kritischer Bereich (26) ermittelt wird.

6. Verfahren nach Anspruch 5, wobei das Einheitlichkeitskriterium einen zulässigen Maximalmittelwert und/oder eine zulässige Maximalvarianz der Vermessungsergebnisse definiert.

7. Verfahren nach einem der vorangehenden Ansprüche, wobei beim Ermitteln eines kritischen Bereichs (26) ein verwendeter Sensortyp berücksichtigt wird und insbesondere eine Messunsicherheit des Sensortyps.

8. Verfahren nach einem der vorangehenden Ansprüche, wobei ein Werkstückbereich dann als kritischer Bereich (26) ermittelt wird, wenn in diesem Werkstückbereich ein vorbestimmtes Fehlerbild ermittelt wird.

9. Verfahren nach einem der vorangehenden Ansprüche, wobei anhand der Vermessungsergebnisse Eigenschaften eines Oberflächenprofils oder Werkstückvolumens eines jeden Werkstücks (20) ermittelt werden und darauf basierend ein kritischer Bereich (26) ermittelt wird.

10. Verfahren nach einem der vorangehenden Ansprüche, wobei sich der Vermessungsparameter auf den Vermessungsprozess zum Erfassen von Messsignalen richtet.

11. Anordnung (10) zur Werkstückvermessung, mit einem Koordinatenmessgerät (12) und mit einer Steuereinrichtung, wobei die Steuereinrichtung dazu eingerichtet ist, ein Verfahren gemäß jeglichem der vorangehenden Ansprüche auszuführen.
